# EUROPEAN PATENT SPECIFICATION

(11) **EP 0 434 637 B1**
(45) Date of publication and mention of the grant of the patent: **06.10.1993**
(21) Application number: 90830554.3
(22) Date of filing: 27.11.1990
(51) Int. Cl.: B23K 11/31

(54) **An articulated coupling for supplying electrical energy and cooling liquid to a welding gun**
Gelenkkupplung für eine Schweisspistole zur Speisung elektrischer Energie und Kühlflüssigkeit
Couplage articulé pour l'alimentation en énergie électrique ainsi qu'en liquide de refroidissement d'un pistolet de soudage

(30) Priority: 22.12.1989 IT 6816189
(43) Date of publication of application: 26.06.1991
(73) Proprietor: FIAT AUTO S.p.A., 10135 Torino (IT)
(72) Inventor: Rinella, Antonino, I-90018 Termini Imerese (Palermo) (IT)
(74) Representative: Quinterno, Giuseppe

(56) References cited:
- EP-A- 0 227 543
- EP-A- 0 384 464

## Description

The present invention relates to an articulated coupling for supplying electrical energy and cooling liquid to a welding gun, according to the preamble of claim 1.

In such guns, electrical energy and cooling water are conventionally supplied by means of a simple electrical connecting cable with flexible piping for the cooling water. Since a gun manipulated by a robot arm is frequently rotated in order to assume the correct orientation in the various welding positions, the electrical supply cable is continually subjected to twisting which causes it to break prematurely with the obvious disadvantage that it has to be replaced frequently.

In order to resolve this problem, Italian utility model No. 206,069 proposed an articulated coupling comprising a hollow, conductive body with a pair of tubular, conductive connectors communicating with the cavity of the body for connection to the welding gun and to a supply main respectively. The connectors have respective ball joints which are in sliding electrical contact with the body and are each defined by a hollow, spherical head carried rigidly on the inner end of the respective connector and fitted in a corresponding seat of complementary shape in the body. A spring is interposed between the two spherical heads and reacts between two telescopically-interconnected retaining members of electrically insulating material coaxial with the body. Each retaining member has a cradle-shaped thrust part which cooperates with the respective spherical head to retain it in its seat in the body.

This known coupling has the disadvantage that the contact pressure achieved by the spring between the spherical heads of the connectors and the body cannot ensure constant electrical contact over a period of time. This coupling is therefore not very reliable since overheating and scorching occur after an initial period of use, affecting the passage of current and producing inefficient or cold points.

The object of the present invention is to prevent the aforesaid problem and to provide an articulated coupling of the type defined which can ensure constant electrical contact between the spherical heads of the connectors and the body of the coupling in use.

According to the invention, this object is achieved with an articulated coupling of the aforementioned type, characterised in that the members for retaining the two spherical heads are in the form of pistons slidable sealingly in the body and that a thrust chamber defined between them is connected to a compressed-air supply for urging the retaining members axially in opposite directions against the respective spherical heads.

The compressed air may, to advantage, be obtained directly from the pneumatic system which moves the gun to which the coupling is fitted and may conveniently be supplied to the thrust chamber defined between the two pistons only for the time needed to carry out the welding. The loading of the spring between the two pistons is normally light so that, when the gun is in the inactive condition, the contact pressure between the spherical heads and their seats in the body is slight, thus preventing unnecessary friction.

Finally, the articulated coupling according to the invention offers the following advantages:
- great reliability in use resulting from the constant electrical contact when the gun is operating,
- less wear of the welding cables,
- fewer stoppages of the robots to replace the cables,
- the fact that the cables can be shorter and of uniform length,
- a reduction in any wastage of manpower in making up for the robot points switched off for the replacement of cables,
- a reduction in the stocks of cable stored,
- greater efficiency of the welding machines as a result of the reduction in the stoppages for the replacement of cables.

Tests carried out by the Applicant have shown that the the electrical cables last at least 4/5 times longer than they do at the moment.

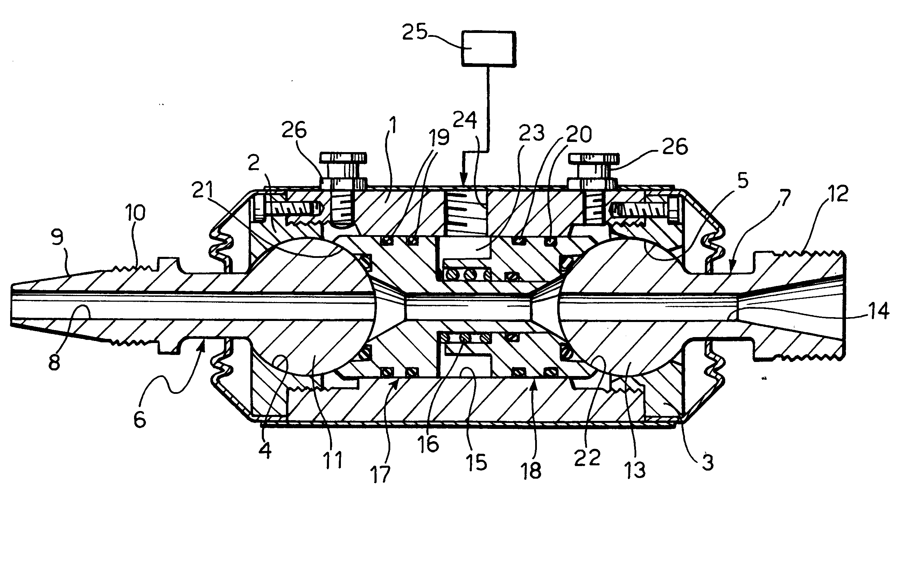

The invention will now be described in detail with reference to the appended drawing, provided purely by way of non-limiting example, which shows schematically and in longitudinal section an articulated coupling according to the invention.

With reference to the drawing, the coupling comprises a hollow, cylindrical body 1 of conductive material, preferably electrolytic copper, with removable annular end pieces 2, 3, also of conductive material, defining respective seats 4, 5 with spherical surfaces facing inwardly of the body 1.

Two tubular connectors 6, 7 of electrically conductive material, for example, a copper alloy, are fitted in the end pieces 2, 3 of the body 1 for connection respectively to a main for supplying electrical energy and cooling water and to a welding gun operated by an industrial robot.

The connector 6 is formed by a single part having an axial through-duct 8 and includes a frusto-conical input end 9 with a threaded part 10 for the attachment of the supply main and a spherical head 11 which is fitted in the body 1 and is engaged rotatably in the spherical seat 4.

The outer end of the other connector 7 has a threaded part 12 for attachment to the welding gun and its inner end has a spherical head 13 similar to the spherical head 11 of the connector 6 engaged rotatably in the spherical seat 5 in the body 1. The connector 7 also has an axial through-duct 14.

The ducts 8 and 14 open into the cavity 15 of the body 1 which has a weak helical compression spring 16 in its central part between two retaining members 17, 18 of electrically insulating material. The two retaining members 17, 18 are mounted coaxially in the body 1 for telescopic sliding relative to each other and, in practice, define two pistons which can slide sealingly in the cavity 15 of the body 1, the sealing being effected by respective sealing rings 19, 20. The pistons 17, 18 are hollow and, at their opposite ends, form cradle-shaped thrust parts 21, 22 which engage the spherical heads 11, 13 on the sides opposite the respective seats 4, 5 under the action of the spring 16. As stated above, the loading of the spring 16 is light and is normally such that the heads 11, 13 are gripped loosely between the respective elements 4, 21 and 5, 22 with spherical surfaces.

The region of the cavity 15 of the body 1 containing the spring 16 and delimited by the two pistons 17, 18 defines a thrust chamber 23 connected by means of a connecting hole 24 in the side wall of the body 1 to a compressed-air supply 25. This supply 25 forms part of the pneumatic system which moves the welding gun in known manner.

The body 1 also has a pair of grease nipples 26 for the periodic greasing of the sliding surfaces of the heads 11, 13 and the respective contact surfaces 4, 5.

In use, as stated above, the connector 6 is connected to the main which supplies electrical energy and cooling water, whilst the connector 7 is connected to the welding gun. The electrical current supplied by the main is transmitted from the connector 6 to the connector 7 through the body 1 by virtue of the contact between the spherical heads 11, 13 and the respective seats 4, 5, whilst the cooling water flows through the ducts 8 and 14 and the cavities in the pistons 17 and 18. The ball joints 11-4 and 13-5 enable the welding gun to assume any angular position without appreciable twisting of the supply main, which reduces the risk of its premature wear and the consequent need for frequent replacement. When the gun is in operation, constant contact between the spherical heads 11 and 13 and their seats 4 and 5 is achieved by the admission of compressed air to the thrust chamber 23 so that the pistons 17 and 18 are urged axially in opposite directions and push the spherical heads 11 and 13 against their seats 4, 5 by means of their respective parts 21 and 22 with spherical surfaces. During the pauses when the gun is not operating, the supply of compressed air to the thrust chamber 23 is interrupted, reducing the contact pressure between the heads 11 and 13 to that achieved by the reaction of the spring 16 and thus limiting the wear which results from friction between the contact surfaces.

Naturally, the details of construction and forms of embodiment may be varied widely with respect to those described and illustrated, without thereby departing from the scope of the present invention as defined in the claim.

## Claims

1. An articulated coupling for supplying electrical energy and cooling liquid to a welding gun, particularly a welding gun operated by means of an industrial robot, comprising a hollow, conductive body (1) with a pair of tubular, conductive connectors (6, 7) communicating with the cavity (15) of the body (1) for connection to the welding gun and to a supply main respectively, the connectors (6, 7) having respective hollow, spherical heads (11, 13) fitted in corresponding seats (4, 5) of complementary shape in the body (1), a spring (16) being interposed between the two spherical heads (11, 13) and reacting between two telescopically-interconnected retaining members (17, 18) of electrically insulating material coaxial with the body (1), each retaining member (17, 18) having a cradle-shaped thrust part (21, 22) which cooperates with the respective spherical head (11, 13) to retain it in its seat (4, 5) in the body (1), characterised in that the retaining members are in the form of pistons (17, 18) slidable sealingly in the body (1) and in that a thrust chamber (23) defined between them is connected to a compressed-air supply (25) for urging the pistons (17, 18) axially in opposite directions against the respective spherical heads (11, 13).

## Patentansprüche

1. Gelenkkupplung zum Versorgen einer Schweißpistole, insbesondere einer durch einen Industrieroboter betätigten Schweißpistole, mit elektrischer Energie und Kühlflüssigkeit, umfassend einen hohlen, leitenden Körper (1) mit einem Paar von mit dem Hohlraum (15) des Körpers (1) in Verbindung stehenden, rohrartigen, leitenden Anschlußelementen (6, 7) zum Anschluß an die Schweißpistole bzw. eine Versorgungshauptleitung, wobei die Anschlußelemente (6, 7) entsprechende hohle, sphärische Köpfe (11, 13) aufweisen, die in entsprechende Sitze (4, 5) komplementärer Form in dem Körper (1) gepaßt sind, eine Feder (16), die zwischen den zwei sphärischen Köpfen (11, 13) angeordnet ist und zwischen zwei koaxial zum Körper (1) teleskopartig verbundenen Halteelementen (17, 18) aus elektrisch isolierendem Material wirkt, wobei jedes Halteelement (17, 18) einen muldenförmigen Schubabschnitt (21, 22) aufweist, der mit dem entsprechenden sphärischen Kopf (11, 13) zusammenwirkt, um ihn in seinem Sitz (4, 5) in dem Körper (1) zu halten,
**dadurch gekennzeichnet,** daß
die Halteelemente die Form von Kolben (17, 18) aufweisen, welche in dem Körper (1) abdichtend verschiebbar sind und daß eine zwischen ihnen gebildete Schubkammer (23) mit einer Druckluftquelle (25) verbunden ist, um die Kolben (17, 18) axial in entgegengesetzten Richtungen gegen die entsprechenden sphärischen Köpfe (11, 13) zu drängen.

## Revendications

1. Raccord articulé pour délivrer de l'énergie électrique et un liquide de refroidissement à un pistolet de soudage, particulièrement à un pistolet de soudage manoeuvré au moyen d'un robot industriel, comprenant un corps conducteur, creux (1) avec une paire de connecteurs conducteurs, tubulaires, (6, 7) en communication avec la cavité (15) du corps (1) pour connexion, respectivement, au pistolet et à une ligne d'alimentation, les connecteurs (6, 7) possédant des têtes sphériques, creuses, (11, 13), montées dans des sièges (4, 5) correspondants de forme complémentaire, dans le corps (1), un ressort (16) étant interposé entre les deux têtes sphériques (11, 13) et agissant entre deux éléments de maintien, reliés de façon télescopique (17, 18) fait d'une matière isolante de l'électricité, coaxiaux avec le corps (1), chaque élément de maintien (17, 18) ayant une partie de poussée en forme d'auge (21, 22) qui coopère avec la tête sphérique (11, 13) respective, pour la maintenir sur son siège (4, 5) dans le corps (1), caractérisé en ce que les éléments de maintien ont la forme de pistons (17, 18) coulissant de façon étanche dans le corps (1) et en ce qu'une chambre de poussée (23), définie entre eux, est raccordée à une alimentation d'air comprimée (25) pour pousser pistons (17, 18) axialement, en sens contraires, contre les têtes sphériques respectives (11, 13).
